# EUROPEAN PATENT APPLICATION

(11) **EP 2 174 557 A1**
(43) Date of publication of application: **14.04.2010**
(21) Application number: 08166086.2
(22) Date of filing: 08.10.2008
(51) Int. Cl.: A23L 1/052, A23L 1/212, A23G 1/00

(54) **Food comprising alkalized cocoa shells and method therefor**

(71) Applicant: Kraft Foods Holdings, Inc., Northfield, Illinois 60093 (US)
(72) Inventor: Chronopoulos, Dimitrios, 81371, Munich (DE); Zuurbier, Richard, 81679, Munich (DE); Brandstetter, Bernhard, 84453 Mühldorf (DE); Jung, Christian, 81545 München (DE)
(74) Representative: HOFFMANN EITLE

(57) **Abstract**

The present invention provides a food comprising at least 30 mass% alkalized cocoa shells based on the total mass of alkalized cocoa shells and cocoa powder in the food. Also provided is a method for manufacturing the food comprising (i) alkalizing cocoa shells which have been separated from cocoa nibs using an alkalizing agent, and (ii) adding the alkalized cocoa shells to a food.

## Description

### Technical Field

The present invention relates to a food comprising cocoa shells, more particularly a food comprising alkalized cocoa shells. A method for manufacturing the food is also provided.

### Background of the Invention

Cocoa shells (also known as cocoa hulls and cocoa husks) are the outer portions of cocoa beans which encase the inner nibs of the beans. The shell of a cocoa bean constitutes approximately 12-15% of the total mass of the bean.

Cocoa nibs and shells are typically separated by cracking cocoa beans and removing the shells. Cocoa beans may be cracked using, for example, mechanical rollers and/or heat treatment (e.g. infrared heat treatment) and the shells and nibs separated by a process known as "winnowing", which operates on the basis of the different densities of the shells and nibs. Separation of the shells and nibs may be performed after the cocoa beans have been fermented to aid in the development of certain tastes. Cocoa beans may also be roasted prior to separation of the shells and nibs to develop the taste and aroma of the beans and help to loosen the shells.

Following separation from the shells, cocoa nibs are usually processed by reducing the fat content of the nibs and grinding the nibs to produce cocoa powder for use in various foods such as chocolate and cocoa beverages. The following illustrates a typical process for producing cocoa powder:

Cocoa nibs are first ground, usually in two stages (e.g. beater-blade milling followed by ball milling), to produce a liquor. The liquor is heated to a temperature typically greater than 110°C and pressed under high pressure (e.g. 540 bar) to remove a portion of the cocoa butter from the liquor. The resulting cocoa cake has to be pre-broken, and is then typically fine milled in two steps using, for example, 2-pin mills (the pines of which are different sizes) to produce cocoa powder. Such processing of cocoa nibs is expensive in terms of the energy and equipment (including maintenance costs) required to produce a cocoa powder having acceptable organoleptic properties.

A further disadvantage of cocoa powder produced from fat-reduced and ground cocoa nibs (hereinafter "cocoa powder") is that it induces a bitter aftertaste in foods. Moreover, cocoa powder still has a high fat content relative to its calorific content. The need to at least partially remove the fatty cocoa butter component of cocoa nibs, which constitutes about 50-55 mass% of the nibs, contributes to the expense of producing cocoa powder.

Cocoa shells are generally viewed as an unwanted by-product of cocoa powder manufacture. Indeed, the 1973 EU Chocolate Directive limits the amount of cocoa shells in cocoa products to no more than 2% based on the total mass of the product. As a consequence, most cocoa shells are discarded or utilized in fertilizers or animal feed following separation from cocoa nibs. For example, US 4,070,487 discloses the use of cocoa shells in ruminant feed in order to increase the appetite of ruminants such as lambs and calves.

WO 2005/004619 discloses a process for the production of a whole cocoa bean product having a shell and nib content corresponding to that of whole cocoa beans based on the mass of dry and de-fatted shells and nibs. The process requires extensive treatment of whole cocoa beans (i.e. both nibs and shells), including cleaning, pressing, grinding, a microbicidal step, drying and further grinding. The whole bean product must be further treated (e.g. by solvent extraction) if its fat content is to be reduced to the levels found in cocoa shells.

The use of extracts of cocoa shells is also known. For example, US 4,156,030 discloses a method in which cocoa shells are extracted using an acidified ethanol solution. The extract is separated from the cocoa shell residue (e.g. using a filter press) and is used to produce a water-soluble flavouring and colouring material for foods such as soft drinks. The cocoa shell residue is discarded, preferably following recovery of ethanol from the residue.

Cocoa shell extracts such as disclosed in US 4,156,030 are not, however, capable of providing foods to which they are added with a chocolate flavour. The extracts are also unsuitable as a useful source of nutrients such as insoluble dietary fibre, and the extracts are not suited to improving the texture (e.g. spreadability) of a food. Moreover, extraction of cocoa shells is expensive, particularly in terms of the need for considerable amounts of solvents and equipment, and extraction produces large amounts of waste since most of the cocoa shell material is left behind as unused residue.

Cocoa shells provide a valuable source of edible nutrients. More particularly, cocoa shells contain approximately 55-65 mass% of dietary fibre, which is around double the dietary fibre content of cocoa powder. Cocoa shells also contain less fat (approximately 6-8 mass%) than standard cocoa powder and whole bean cocoa powder (10-12 mass% minimum). Cocoa shells are therefore a nutritionally beneficial alternative to cocoa powder in that they may be used to increase the fibre content and reduce the fat content of a food relative to cocoa powder.

However, cocoa shells give rise to a fibrous, cereal-like flavour in foods to which they are added. This is undesirable for producing a food which exhibits a chocolate flavour comparable to that produced by cocoa powder.

Accordingly, it is an object of the present invention to provide a food which has a good chocolate flavour, whilst providing a valuable source of edible nutrients and avoiding the above-mentioned disadvantages associated with cocoa powder and cocoa shells.

### Summary of the Invention

A first embodiment of the present invention is a food comprising at least 30 mass% alkalized cocoa shells based on the total mass of alkalized cocoa shells and cocoa powder in the food.

Alkalized cocoa shells have surprisingly been found to provide foods with a good chocolate flavour when added to the foods in the above amount, which is markedly greater than the shell content of whole cocoa beans based on the total mass of the beans. At the same time, cereal-like tastes associated with non-alkalized cocoa shells and bitter notes associated with cocoa powder are avoided. Alkalized cocoa shells have also been found to induce desirable fruity flavours such as a cinnamon flavour in foods.

Incorporating alkalized cocoa shells into a food in the above amount as a replacement for cocoa powder increases the fibre content of the food. Moreover, since cocoa shells have a much lower fat content than cocoa nibs, the fat content of the food is reduced without having to perform a de-fatting process such hydraulic pressing or solvent extraction.

It has further been found that alkalized cocoa shells provide foods to which they are added with a unique texture (e.g. a jelly-like texture) which is especially suitable for certain applications. Specifically, alkalized cocoa shells can be used to increase the viscosity of a food compared to cocoa powder, whilst lowering the viscosity of the food compared to non-alkalized shells. Alkalized cocoa shells are thus particularly useful for controlling the viscosity of foods such as an acidified dairy food (e.g. cream cheese) and a yogurt.

The use of alkalized cocoa shells in the above amount is also economically advantageous since separated cocoa shells which might otherwise have been discarded may be used to partially or fully replace cocoa powder in a food. The quantity of cocoa beans which are required to produce a chocolate-flavoured food is thereby reduced, thus avoiding costly processing of cocoa nibs. The use of separated cocoa shells provides the added advantage of avoiding the need to subject nibs and shells, which have different physico-chemical properties, to the same processing treatments.

Another embodiment of the present invention is a method for manufacturing a food comprising the steps of:
(i) alkalizing cocoa shells which have been separated from cocoa nibs using an alkalizing agent; and
(ii) adding the alkalized cocoa shells to a food so that the food comprises at least 30 mass% alkalized cocoa shells based on the total mass of alkalized cocoa shells and cocoa powder in the food.

The method avoids expensive extraction treatments and processing (including alkalization) of cocoa nibs. The method also provides the above-mentioned advantages in that the food has a good chocolate flavour, nutritional value and texture.

### Brief Description of the Drawings

Figure 1: Flow diagram illustrating a method for manufacturing a food according to a preferred embodiment of the invention.
Figure 2: Flow diagram illustrating a method for manufacturing a food according to an alternative embodiment of the invention.
Figure 3: Photograph of a natural yogurt drink.
Figure 4: Photograph of a natural yogurt drink comprising 9 mass% alkalized cocoa shells.
Figure 5: Photograph of a natural yogurt drink comprising 9 mass% non-alkalized cocoa shells.

### Detailed Description of the invention

A food comprising at least 30 mass% alkalized cocoa shells based on the total mass of alkalized cocoa shells and cocoa powder in the food according to one embodiment of the present invention will be explained in detail as follows.

The food may be any food which is desired to have a chocolate flavour. Particular examples of the food include a beverage formulation such as a cocoa beverage formulation and a coffee beverage formulation, chocolate (including a chocolate spread), a biscuit, a filling, a mousse, cream and an acidified dairy food such as cheese (including cream cheese, cottage cheese and quark), sour cream, buttermilk, kefir, yogurt (including a drinkable and a spoonable yogurt) and fromage frais. The food is preferably a cocoa beverage formulation, a yogurt or cream cheese, more preferably a cocoa beverage formulation. A cocoa beverage formulation is a formulation, preferably a powder, which dissolves substantially in a liquid such as water or milk to produce a chocolate-flavoured beverage.

Incorporating alkalized cocoa shells into a food such as a yogurt or cream cheese in an amount of at least 30 mass% based on the total mass of alkalized cocoa shells and cocoa powder in the food increases the viscosity of the food as compared with a food comprising a lower proportion of alkalized shells due to the enhanced water-binding ability of cocoa shells. On the other hand, alkalized cocoa shells can be used to lower the viscosity of a food relative to non-alkalized cocoa shells. It is believed that this is caused by a reduction in the interaction between cocoa shell proteins and milk proteins due to alkalization of the shells. Alkalized cocoa shells are thus effective for controlling the viscosity of a food. For instance, a cream cheese spread comprising alkalized cocoa shells in an amount of at least 30 mass% based on the total mass of alkalized cocoa shells and cocoa powder is highly spreadable and has a unique texture (e.g. a gelly-like texture), and the food has a shiny appearance compared to a non-alkalized cocoa shell-containing cream cheese. Moreover, the food is stable to freezing and thawing.

The term "cocoa shell" refers to the outer portion of a cocoa bean which encases the inner nib portion of the bean and is separable from the nib. Cocoa shells are obtainable by conventional methods which involve cracking cocoa beans and separating the shells from the nibs. For example, fermented/non-fermented (preferably fermented), roasted/non-roasted (preferably roasted) cocoa beans may be cracked by mechanical rollers and/or heat treatment, and the shells and nibs separated by winnowing.

The separated cocoa shells may be further processed, e.g. washed and dried.

It is preferred that the cocoa shells are roasted from the viewpoint of flavour development. In particular, roasting serves to develop the aroma of cocoa shells through the Maillard reaction. Cocoa beans (and thereby cocoa shells) may be roasted prior to separating the shells and nibs. Roasting conditions may vary; for instance, cocoa beans may be roasted at a temperature of around 115°C for 16-18 minutes.

The term "alkalized" refers to cocoa shells which have undergone treatment in order to increase the pH of the shells. Such treatment is described in detail below. The pH of the alkalized cocoa shells is preferably 6.0-8.5, more preferably 6.5-8.0 in order to avoid cereal-like flavours in the food.

According to a preferred embodiment, the food comprises 30-50 mass%, more preferably 30-40 mass%, alkalized cocoa shells based on the total mass of alkalized cocoa shells and cocoa powder in the food from the viewpoint of providing a good chocolate flavour without significant bitter notes and providing the food with a good texture. For instance, a cocoa beverage formulation preferably comprises 30-50 mass%, more preferably 30-40 mass%, alkalized cocoa shells based on the total mass of alkalized cocoa shells and cocoa powder in the formulation so that a beverage produced from the formulation has a comparable chocolate taste to a traditional cocoa beverage and the beverage has a good texture (mouthfeel).

The food preferably comprises at least 30 mass%, more preferably 30-50 mass%, alkalized cocoa shells based on the total mass of dry and de-fatted alkalized cocoa shells and dry and de-fatted cocoa powder in the food. This amount of alkalized shells is greater than the shell content of whole cocoa beans based on the total mass of dry and de-fatted shells and nibs constituting the beans (no more than around 25 mass%).

In an alternative preferred embodiment, the food comprises 100 mass% alkalized cocoa shells based on the total mass of alkalized cocoa shells and cocoa powder in the food. More preferably, the food comprises alkalized cocoa shells as the only source of a chocolate flavour. That is, the food comprises 100 mass% alkalized cocoa shells based on the total mass of all chocolate-flavoured components in the food. For example, alkalized cocoa shells can be used to increase the pH of a yogurt and provide the yogurt with a good chocolate flavour and texture without the use of other cocoa ingredients such as cocoa powder.

It is further preferred that the food comprises 1-20 mass%, more preferably 3-15 mass% and most preferably 5-13 mass%, alkalized cocoa shells based on the total mass of the food in order to provide the food with a good chocolate flavour and a good texture.

The alkalized cocoa shells are preferably ground so that they are more easily blended into the food and give the food a good flavour and mouthfeel. The term "ground" refers to shells which have been subjected to grinding, crushing, pulverization or some other treatment in order to reduce the size of the shell particles. Cocoa shells may be ground using conventional techniques such as mechanical milling, whereby moving mechanical parts reduce the size of the shell particles. Examples of mechanical milling systems include beater blade mills, pin mills and differential mills. Alternatively, cocoa shells may be ground using a vortex processing apparatus such as that described in EP 1 733 624, whereby an air vortex reduces the size of cocoa shell particles without the shells contacting moving mechanical parts. More preferably, cocoa shells are ground by jet-milling, whereby high-velocity air subjects shell particles to severe turbulences. This causes inter-particle collisions which reduce the size of the shell particles. A rotating classifier wheel in the jet-milling apparatus allows only shell particles having a diameter below a particular maximum value to pass through, thus controlling the size of the ground shell particles exiting the apparatus.

It is preferred that the alkalized cocoa shell particles in the food have a D₉₀ value of less than 80 µm, more preferably less than 40 µm and most preferably less than 30 µm, from the viewpoint of producing a food having an optimum taste and mouthfeel. It is also preferred that less than 10 mass%, more preferably less than 1 mass%, of the alkalized cocoa shell particles have a diameter greater than 75 µm.

In the case that the food comprises cocoa powder, it is preferred that the cocoa powder is alkalized. Furthermore, the cocoa powder may be combined with a surfactant such as lecithin.

The food may also comprise non-alkalized cocoa shells. However, it is preferred that non-alkalized cocoa shells are contained in the food in an amount of no more than 50 mass%, more preferably no more than 30 mass%, based on the mass of alkalized cocoa shells in the food. It is most preferred that the food comprises no non-alkalized cocoa shells.

The food may comprise further ingredients such as chocolate, sugar (e.g. glucose or sucrose), cream, butter, hazelnut paste, a flavouring (e.g. vanilla and/or hazelnut flavourings) and a surfactant (e.g. lecithin). The further ingredients may constitute up to 85 mass% of the food, preferably not more than 80 mass%, and most preferably not more than 75 mass%.

The water content of the alkalized cocoa shells is preferably less than 8 mass%, more preferably less than 5 mass%, based on the total mass of the shells.

According to another embodiment of the present invention, a food comprising alkalized cocoa shells as described above is manufactured by a method comprising the steps of:
(i) alkalizing cocoa shells which have been separated from cocoa nibs using an alkalizing agent; and
(ii) adding the alkalized cocoa shells to a food so that the food comprises at least 30 mass% alkalized cocoa shells based on the total amount of alkalized cocoa shells and cocoa powder in the food.

Alkalization conditions can vary depending on the desired pH of the alkalized cocoa shells and the identity of the food to which the alkalized cocoa shells are added.

Cocoa shells may be alkalized by mixing the shells with an aqueous solution or suspension comprising one or more alkalizing agents selected from sodium hydroxide (NaOH), ammonium carbonate ((NH₄)₂CO₃) (e.g. as ammonium sesquicarbonate), ammonium bicarbonate (NH₄HCO₃), sodium carbonate (Na₂CO₃), potassium carbonate (K₂CO₃) and mixtures thereof. A preferred alkalizing agent is sodium hydroxide, ammonium carbonate or a mixture thereof. For instance, a cocoa beverage formulation comprising cocoa shells which have been alkalized using an aqueous solution comprising sodium hydroxide and ammonium carbonate delivers a similar chocolate taste to a traditional beverage formulation comprising cocoa powder when the alkalized shells replace 30 mass% of more, even 50 mass% or more, of the cocoa powder. The ratio of the mass of sodium hydroxide to the mass of ammonium carbonate in the solution is preferably 0.25-0.50. On the other hand, the use of sodium hydroxide alone can be used to produce fruity notes as well as a chocolate taste in foods, e.g. a yogurt. Alkalization of cocoa shells using ammonium carbonate as the sole alkalizing agent can be used to provide cinnamon-like notes in a food.

The alkalizing agent is preferably used in an amount of 4-25 mass%, more preferably 10-20 mass% and most preferably 13-17 mass%, based on the mass of the cocoa shells as dry and de-fatted shells in order to provide a food to which the shells are added with a good flavour and texture.

It is preferred that cocoa shells are mixed with an alkalizing agent in 30-70 mass%, most preferably about 35 mass%, water based on the total mass of the cocoa shells.

Cocoa shells may be alkalized by mixing the shells with an alkalizing agent using a conventional apparatus such as a Stephen cooker or a Barth alkalizer. Alkalization is preferably performed using a multifunctional mixer having a homogenizer (rotor-stator device) in the reaction chamber in order to provide efficient mixing of the reactants and prevent agglomeration of shell particles during alkalization.

Cocoa shells may be heated to a predetermined temperature, preferably 80-100ºC, prior to mixing the shells with an alkalizing agent. The alkalization reaction is then carried out for a predetermined time period and under controlled conditions. In particular, it is preferred to mix cocoa shells and an alkalizing agent at a temperature of 70-180°C, more preferably 90-130°C, under a pressure of 1-10 bar, more preferably 2-8 bar, for 30-120 minutes, preferably 40-80 minutes and more preferably about 60 minutes.

Cocoa shells may be alkalized as "whole" shells, meaning that the shells are not ground following separation from the nibs. It is, however, preferred that cocoa shells are ground after separation from cocoa nibs (e.g. by winnowing) and before the shells are alkalized. This may be achieved using the grinding methods discussed above, and is preferably achieved by jet-milling. Grinding cocoa shells prior to alkalizing the shells improves the processing ability of the shells. In particular, whole cocoa shells have been found to absorb water in amounts which can hinder processing of the shells, particularly alkalization of the shells. On the other hand, ground cocoa shells have been found to exhibit less binding to water than whole cocoa shells, which allows the ground shells to be more easily alkalized. In this regard, it is preferred that the cocoa shells have a D₉₀ value of less than 40 µm prior to alkalization of the shells, more preferably a D₉₀ value of 25 µm or less.

The cocoa shells may also be ground after alkalization in order to break up shell agglomerates produced during alkalization. Such post-alkalization grinding enables the shells to be more readily incorporated into a food, thereby giving the food a good taste, texture (mouthfeel) and appearance. Grinding may be performed by any of the methods discussed above. In the case that the cocoa shells are ground prior to alkalization, mechanical milling of the alkalized shells may be sufficient to separate shell agglomerates. However, it is preferred that the shells are alkalized in a multifunctional mixer as described above. This can avoid the need to grind the shells following alkalization since the formation of shell agglomerates is prevented by the homogenizer in the multifunctional mixer. In the case that whole cocoa shells are alkalized, it is preferred to grind the alkalized shells by jet-milling to effectively reduce the size of the shell particles.

More preferably, cocoa shells are ground before and after alkalization of the shells.

The alkalized cocoa shells preferably have a D₉₀ value of less than 80 µm, more preferably less than 40 µm and most preferably less than 30 µm, as described above.

It is further preferred that cocoa shells are dried following alkalization and prior to adding the shells to a food. Cocoa shells may be dried prior to grinding the shells following alkalization of the shells in order to facilitate grinding of the shells. Alkalized shells may be dried using conventional methods such as drying under vacuum at an elevated temperature. This may be performed for a period of time sufficient to suitably dry the alkalized shells, e.g. 60-120 minutes for ground alkalized shells, and up to around four hours for whole alkalized cocoa shells. The alkalized cocoa shells to be added to a food preferably have a water content of less than 8 mass%, more preferably less than 5 mass%, based on the total mass of the alkalized cocoa shells.

Cocoa shells may undergo further processing after alkalization of the shells and prior to adding the shells to a food. For example, alkalized shells may be lecithinated.

Alternatively, cocoa shells can be lecithinated whilst they are in the alkalizing apparatus.

It is preferred that the cocoa shells are roasted. The shells may be roasted before or after they are separated from cocoa nibs and before or after alkalization of the shells. Preferably, cocoa beans (and thereby shells) are roasted, the shells separated from the nibs, and the shells alkalized in this order.

Cocoa beans may also undergo a debacterization step prior to optional roasting of the beans and prior to separating the nibs and shells. Debacterization may be performed by any conventional method. For instance, cocoa beans can be debacterized using the Buhler method, whereby the beans are treated with heated (130-250°C) and pressurized (300-550 kPa) steam for a short period of time (0.5-5 minutes).

Alkalized cocoa shells may be added to a food by blending the shells with the food. Blending may be performed using conventional methods; for example, alkalized cocoa shells may be blended with a food using conventional mixing equipment such as a Thermomix^{™} blender, a Roversi^{™} cooker, a ribbon blender, an APV-liquiverter, a Stephen cooker or similar equipment in order to intimately mix the alkalized cocoa shells into the food. A food having alkalized cocoa shells added thereto may undergo further processing such as agglomeration and/or lecithination in the case of, for example, a cocoa beverage formulation, or pasteurization and/or filling in the case of, for example, an acidified dairy food. The filling step may be hot filling (> 65°C) or hygienic cold filling (< 40°C).

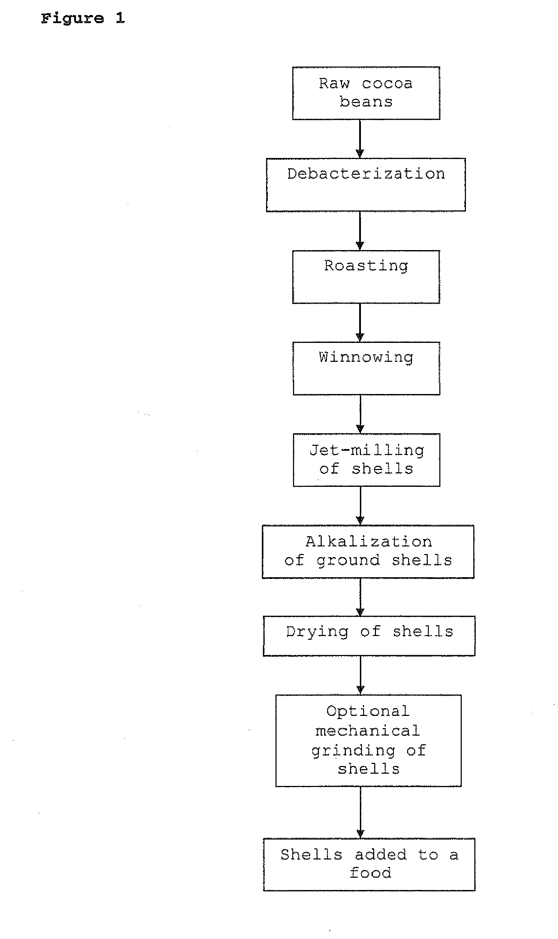

According to a particularly preferred embodiment, raw cocoa beans are debacterized and roasted, and the nibs and shells of the beans separated by winnowing. The shells are then ground by jet-milling, alkalized, dried and optionally mechanically ground to separate any agglomerates before the shells are added to a food. This method is illustrated in Figure 1.

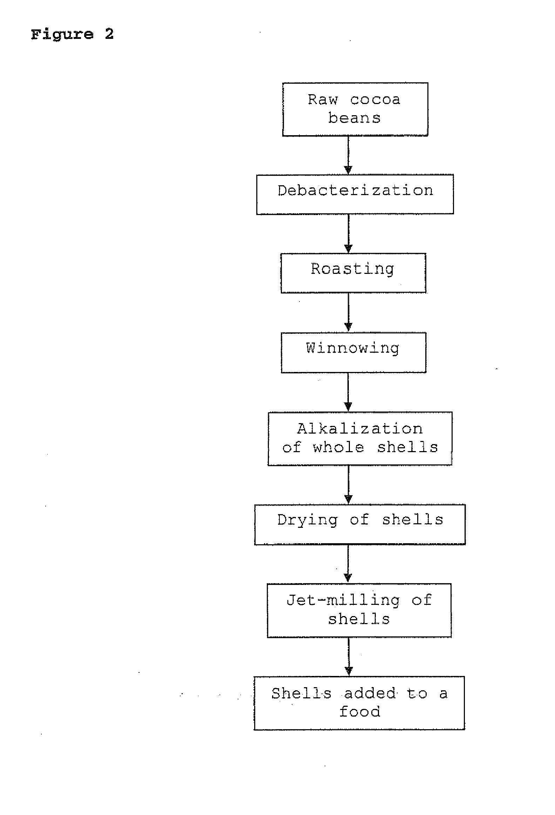

According to an alternative embodiment, raw cocoa beans are debacterized and roasted, and the nibs and shells of the beans separated by winnowing. The whole shells are then alkalized, dried and ground by jet-milling before being added to a food. This method is illustrated in Figure 2.

A further embodiment of the present invention is the use of alkalized cocoa shells for providing a food with a chocolate flavour. The food is as described above, and is preferably a cocoa beverage formulation, an acidified dairy food or a yogurt. Preferably, alkalized cocoa shells are used as the only chocolate flavouring in the food. It is also preferred that the alkalized shells are ground as described above.

### EXAMPLES

The present invention is illustrated by the following examples. Unless otherwise stated, all amounts are percentages by mass (mass%) based on the total mass of the food.

### Determination of particle size by laser diffraction

The size of cocoa shell/cocoa powder particles was determined as an equivalent diameter based on a volume distribution. A D₉₀ value of, for example, 40 µm means that 90% by volume of particles have an equivalent diameter of 40 µm or less based on a volume distribution

A volume distribution for a cocoa shell/cocoa powder sample was produced by analyzing the laser diffraction pattern created by circulating a dispersion of the sample through a laser beam in a Malvern apparatus which operates on the basis of Mie light scattering.

The diffraction pattern was analyzed using Fraunhofer theory to produce a particle size distribution from which equivalent diameters based on hypothetical spherical particles (D₉₀ values) were determined.

A dispersed sample was prepared by first mixing a cocoa shell/cocoa powder sample thoroughly in a container by inverting and shaking. Approximately 2 g of the sample was then mixed with a small amount of Akomed R^{™} to form a smooth paste. An amount (160 mg ±20 mg) of the paste was weighed out into a clean round-bottomed tube and 20 ml of Akomed R^{™} was added thereto. The sample was dispersed using an ultrasonic probe for two minutes at maximum displacement.

### Determination of Stevens values

The Stevens value of a food indicates its firmness at a particular temperature.

The Stevens value of a food at 10°C (St10 value) was determined by measuring the peak penetration force (in grams) of a conical (45°) probe dropped into a sample of the food to a depth of 10 mm at a penetration speed of 2 mm/second using a Stevens LFRA Texture Analyzer. The sample was contained in a tub in an amount of 200 g. Prior to testing, the sample was stored at a temperature of 10°C for two days without mixing to equilibrate the sample.

The reported Stevens value of a food is the average of the Stevens values recorded for three samples of the food, the standard deviation of the Stevens values of the samples being no more than 10%.

### Evaluation

### Panel test

The foods were evaluated by a panel test using 10 organoleptic experts from Kraft Foods GTQ Munich dairy and confectionery department. The foods were blind tasted and rated on taste, texture and appearance. The results are an average of the ratings given by each tester.

### Reference Example

A standard cocoa beverage was prepared by mixing 20 g of the following cocoa beverage formulation (KABA^{™}, manufactured by Kraft Foods, Inc) with 200 ml of refrigerated milk (6-10°C; 1.5% fat).

### KABA^{™} composition:

| | | |
|---|---|---|
| o | Crystal sugar | 58.11% |
| o | Dextrose monohydrate | 21.63% |
| o | Alkalized, lecithinated cocoa powder | 19.21% |
| o | Water Condensate | 0.70% |
| o | Sodium Chloride | 0.30% |
| o | Flavourings | 0.05% |
| | | |
| | Total fat: | 3.0% |
| | Total fibre: | 5.6% |

The cocoa powder in the above composition is a fat-reduced (11 mass% fat) alkalized cocoa powder to which soya lecithin has been added. The cocoa powder is produced from the nibs of healthy, well-fermented West African cocoa beans (mainly from the Ivory Coast region). The cocoa powder has a D₉₀ value of 20.07µm, and the moisture content of the cocoa powder is 2.5 mass% based on the mass of the cocoa powder.

### Example 1 - cocoa beverage formulation

Cocoa beans from the Ivory Coast region were roasted at 115°C, and the shells and nibs of the beans were separated by conventional winnowing. The roasted whole cocoa shells were then ground using a jet-milling apparatus at a temperature of 15-21°C and a pressure of 6.9 bar. Shells were supplied into the apparatus at a rate of 75 kg/hr and the flow rate of the compressed air in the apparatus was 27-35 m³/min. The ground cocoa shell particles had a D₉₀ value of 24.50 µm and a pH of 5.05.

8 kg of the roasted ground cocoa shells were fed into a Barth alkalizer and heated for 20 minutes to a temperature of 90°C. An aqueous solution of 295 g of sodium hydroxide in 2800 ml of water (4.05 mass% NaOH based on the mass of the cocoa shells as dry and de-fatted cocoa shells, and 35 mass% water based on the mass of the cocoa shells) was injected into the cooker over a period of five minutes and the reaction mixture heated to 134°C under a pressure of 2.3 bar. After 60 minutes the mixture was dried under vacuum at 115ºC for 60 minutes.

The alkalized cocoa shells had a D₉₀ value of 32.00 µm. The pH of the alkalized shells was 6.53. The water content of the shells was 3.90 mass% and the fat content of the shells was 7.00 mass% based on the mass of the alkalized shells.

A cocoa beverage formulation corresponding to the above KABA^{™} formulation was manufactured, apart from 30 mass% of the alkalized and lecithinated cocoa powder in the KABA^{™} formulation was replaced with the above alkalized cocoa shells. The shells were blended with the cocoa beverage formulation using a conventional blender. The resultant cocoa beverage formulation had the following composition:

| | | |
|---|---|---|
| o | Crystal sugar | 58.11% |
| o | Dextrose monohydrate | 21.63% |
| o | Alkalized, lecithinated cocoa powder | 13.45% |
| o | Alkalized ground cocoa shells | 5.76% |
| o | Water Condensate | 0.70% |
| o | Sodium Chloride | 0.30% |
| o | Flavourings | 0.05% |
| | | |
| | Total fat: | 2.81% |
| | Total fibre: | 6.0% |

20 g of the above cocoa beverage formulation was mixed with 200 ml of refrigerated milk (6-10°C; 1.5% fat) in a plastic cup to produce a cocoa beverage. The appearance and taste of the cocoa beverage were evaluated against the standard cocoa beverage produced in the Reference Example. The results are summarized in Table 1 below.

### Examples 2 and 3

A cocoa beverage was produced in the same manner as described in Example 1, except that the amount of alkalized cocoa shells and the amount of cocoa powder in the cocoa beverage formulation were altered, as shown in Table 1 below.

### Example 4

A cocoa beverage was produced in the same manner as described in Example 1, except that the cocoa shells were alkalized using an aqueous solution of 295 g of ammonium sesquicarbonate in 2800 ml of water (4.05 mass% NH₂CO₂NH₄·NH₄HCO₃ based on the mass of the cocoa shells as dry and de-fatted cocoa shells, and 35 mass% water based on the mass of the cocoa shells).

The alkalized cocoa shells had a D₉₀ value of 31.50 µm. The pH of the alkalized shells was 5.65 and the water content of the shells was 4.00 mass% based on the mass of the alkalized shells.

### Examples 5 and 6

A cocoa beverage was produced in the same manner as described in Example 4, except that the amount of alkalized cocoa shells and the amount of cocoa powder in the cocoa beverage formulation were altered, as shown in Table 1 below.

### Example 7

A cocoa beverage was produced in the same manner as described in Example 1, except that the cocoa shells were alkalized using an aqueous solution of 960 g of ammonium sesquicarbonate in 2800 ml of water (13.19 mass% NH₂CO₂NH₄·NH₄HCO₃ based on the mass of the cocoa shells as dry and de-fatted cocoa shells, and 35 mass% water based on the mass of the cocoa shells).

The alkalized cocoa shells had a D₉₀ value of 27.30 µm. The pH of the alkalized shells was 5.77. The water content of the shells was 4.80 mass% and the fat content of the shells was 8.60 mass% based on the mass of the alkalized shells.

### Examples 8 and 9

A cocoa beverage was produced in the same manner as described in Example 7, except that the amount of alkalized cocoa shells and the amount of cocoa powder in the cocoa beverage formulation were altered, as shown in Table 1 below.

### Example 10

A cocoa beverage was produced in the same manner as described in Example 1, except that the cocoa shells were alkalized using an aqueous solution of 960 g of ammonium sesquicarbonate and 295 g of sodium hydroxide in 2800 ml of water (13.19 mass% NH₂CO₂NH₄·NH₄HCO₃ and 4.05 mass% NaOH based on the mass of the cocoa shells as dry and de-fatted cocoa shells, and 35 mass% water based on the mass of the cocoa shells).

The alkalized cocoa shells had a D₉₀ value of 34.10 µm. The pH of the alkalized shells was 7.87. The water content of the shells was 5.60 mass% and the fat content of the shells was 7.65 mass% based on the mass of the alkalized shells.

### Example 11

A cocoa beverage was produced in the same manner as described in Example 10, except that the amount of alkalized cocoa shells and the amount of cocoa powder in the cocoa beverage formulation were altered, as shown in Table 1 below.

### Example 12

A cocoa beverage was produced in the same manner as described in Example 1, except that the cocoa shells were alkalized using an aqueous solution of 510 g of potassium carbonate in 2800 ml of water (7.0 mass% K₂CO₃ based on the mass of the cocoa shells as dry and de-fatted cocoa shells, and 35 mass% water based on the mass of the cocoa shells).

The alkalized cocoa shells had a D₉₀ value of 32.80 µm. The pH of the alkalized shells was 6.74. The water content of the shells was 7.30 mass% and the fat content of the shells was 7.65 mass% based on the mass of the alkalized shells.

### Example 13

A cocoa beverage was produced in the same manner as described in Example 12, except that the amount of alkalized cocoa shells and the amount of cocoa powder in the cocoa beverage formulation were altered, as shown in Table 1 below.

### Comparative Example 1

A cocoa beverage was produced in the same manner as the beverage of Example 1, except that the roasted ground cocoa shells were not alkalized.

### Comparative Examples 2-4

A cocoa beverage was produced in the same manner as described in Comparative Example 1, except that the amount of non-alkalized cocoa shells and the amount of cocoa powder in the cocoa beverage formulation were altered, as shown in Table 1 below.

**Table 1: Results of Examples 1-13 and Comparative Examples 1-4**

| Example | Amount of cocoa shells in cocoa beverage formulation (mass% of shells based on total mass of cocoa shells and cocoa powder) | | Appearance | Taste |
|---|---|---|---|---|
| | Alkalized shells | Non-alkalized shells | | |
| Reference - standard formulation | 0 (0) | 0 (0) | Uniform light brown colour; some sedimentation | Standard cocoa taste |
| 1 | 5.76 (30) | 0 (0) | Slightly darker colour than standard | Close to standard |
| 2 | 9.61 (50) | 0 (0) | Darker colour than standard; some sedimentation | Fruity notes |
| 3 | 19.21 (100) | 0 (0) | Darker colour than standard; some sedimentation | Strong fruity notes |
| 4 | 5.76 (30) | 0 (0) | Slightly darker colour than standard | Close to standard |
| 5 | 9.61 (50) | 0 (0) | Darker colour than standard | Good cocoa taste |
| 6 | 19.21 (100) | 0 (0) | Much darker colour than standard; some sedimentation | Reduced cocoa taste; fruity/cinnamon notes. |
| 7 | 5.76 (30) | 0 (0) | Darker colour than standard | Close to standard; slight fruity notes |
| 8 | 9.61 (50) | 0 (0) | Darker colour than standard; some sedimentation | Reduced cocoa taste; fruity/cinnamon notes |
| 9 | 19.21 (100) | 0 (0) | Much darker colour than standard; some sedimentation | Low cocoa taste; sweet |
| 10 | 5.76 (30) | 0 (0) | Similar colour to standard | Very close to standard; no aftertaste |
| 11 | 9.61 (50) | 0 (0) | Similar colour to standard | Very close to standard; no aftertaste |
| 12 | 5.76(30) | 0 (0) | Similar colour to standard | Reduced cocoa taste; slight cinnamon notes |
| 13 | 9.61 (50) | 0 (0) | Slightly darker colour than standard | Strong cinnamon notes |
| Comparative Example 1 | 0 (0) | 5.76 (30) | Colour as standard; ring of powder on cup. | Some cereal-like notes |
| Comparative Example 2 | 0 (0) | 7.68 (40) | Colour as standard; ring of powder on cup | Cereal-like notes |
| Comparative Example 3 | 0 (0) | 9.61 (50) | Colour as standard; ring of powder on cup; foam formation | Strong cereal-like notes |
| Comparative Example 4 | 0 (0) | 19.21 (100) | Colour as standard; ring of powder on cup; significant foaming | Very strong cereal-like notes |

The results in Table 1 illustrate that a cocoa beverage produced from a formulation comprising alkalized cocoa shells in an amount of at least 30 mass% based on the total mass of alkalized cocoa shells and cocoa powder in the formulation has an acceptable chocolate taste, whilst avoiding cereal-like notes associated with non-alkalized cocoa shells. Alkalized cocoa shells also provide other unique flavours. At the same time, alkalized cocoa shells provide nutritional advantages (higher fibre and lower fat content) and economic advantages (reduced processing costs and reduced wastage of shells) compared to cocoa powder.

### Example 14 - cream cheese spread

A low-fat cream cheese spread having the composition shown below was prepared by blending alkalized cocoa shells as produced in Example 12 with the cream cheese spread base and the other listed ingredients. The cream cheese spread base was mixed together with the ingredients other than the cocoa shells in a Thermomix^{™} mixer (grade 2-3, 800 rpm) and heated to a temperature of 50°C for 7-8 minutes. The cocoa shells were then added to the mixture and the temperature was raised to 60°C. Mixing was conducted initially for two minutes using a mixing speed of 800 rpm, followed by mixing for three minutes at 82°C to pasteurize the food. The mixed food was hot filled at a temperature of 65°C into plastic cups in 200 g aliquots and stored at 4°C.

### Composition of the cream cheese spread:

| | | |
|---|---|---|
| ○ | Philadelphia Light FWPC^{™} cream cheese spread (manufactured by Kraft Foods, Ltd.) (12% fat) | 50.7% |
| ○ | Cream (30% fat) | 17.9% |
| ○ | Sucrose | 15.3% |
| ○ | Alkalized ground cocoa shells (7.65% fat; 60% fibre) | 12.6% |
| o | Butter (82.5% fat) | 3.5% |

The spread had a unique chocolate and alkali-cocoa flavour reminiscent of Oreo Cookies, and the spread produced no cereal notes. The spread also had a black colour, a smooth texture, a shiny appearance and a good spreadability, making it especially suitable as a filling. The St10 value of the spread following refrigeration at 4°C for 44 days was found to be 60 g. The spread had a pH of 6.28.

### Comparative Example 5

A low-fat cream cheese spread having the composition shown below was prepared in the same manner as described in Example 14, except that the cocoa shells were not alkalized. The non-alkalized cocoa shells had a D₉₀ value of 24.50 µm.

| | | |
|---|---|---|
| ○ | Philadelphia Light FWPC^{™} cream cheese spread (manufactured by Kraft Foods, Ltd.) (12% fat) | 50.7% |
| ○ | Cream (30% fat) | 17.9% |
| ○ | Sucrose | 15.3% |
| ○ | Non-alkalized ground cocoa shells (6% fat; 60% fibre) | 12.6% |
| ○ | Butter (82.5% fat) | 3.5% |

The spread had a good chocolate taste, but exhibited a cereal-like aftertaste. The St10 value of the spread following refrigeration at 4°C for 44 days was found to be 95 g; that is, the viscosity of the spread was higher than that of the spread produced in Example 14. The spread had a pH of 5.04.

It can be concluded from Example 14 and Comparative Example 5 that the use of alkalized cocoa shells avoids fibrous cereal tastes and provides a cream cheese spread with a unique chocolate flavour and texture. The increased pH of the spread of Example 14 compared to that of Comparative Example 5 is thought to be responsible for the less significant increase in the viscosity of the spread.

### Example 15 - drinkable yogurt

A drinkable chocolate-flavoured yogurt comprising 9 mass% cocoa shells and no cocoa powder was prepared by mixing 50 g of alkalized cocoa shells as produced in Example 10 into 500 ml of a natural liquid yogurt drink (1% fat) in a Thermomix^{™} mixer. Mixing was initially carried out at a mixing speed of 3 rpm whilst heating the mixture to a temperature of 74.4°C over a period of six minutes. Further mixing was performed at 2 rpm and 70°C for five minutes. The mixture was subsequently hot-filled into cups in 200 g aliquots and stored at 4°C.

The yogurt was found to have a good dark chocolate-like flavour, and the sourness of the yogurt was reduced relative to the yogurt base (the pH of the yogurt was 5.81, whereas the pH of the yogurt base was 4.09). The yogurt was dark-brown (dark chocolate-like) in colour.

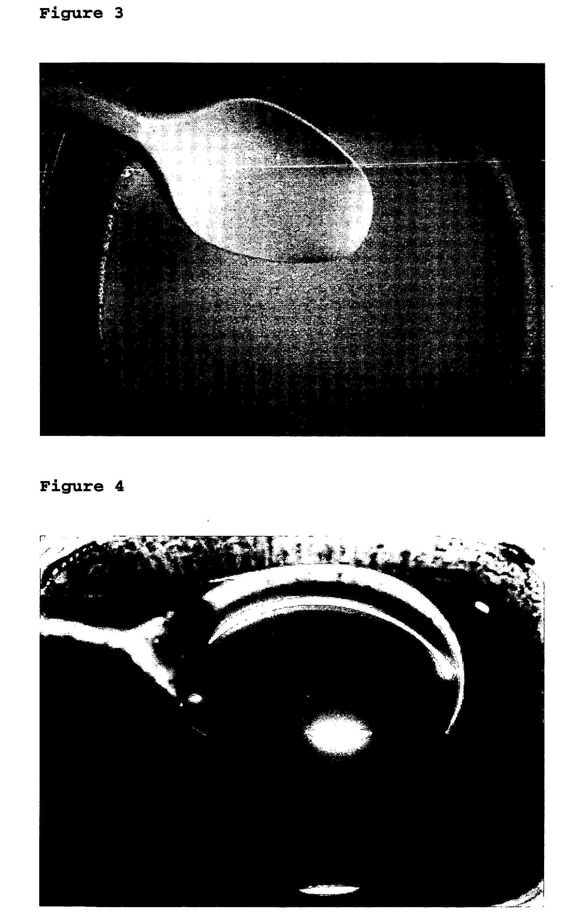

The viscosity of the yogurt base was not substantially altered by the addition of the alkalized cocoa shells. The yogurt therefore remained readily drinkable, whilst having a smooth texture. This is illustrated by comparing Figure 3 (100% yogurt) with Figure 4 (91% yogurt, 9% alkalized cocoa shells).

### Comparative Example 6

A drinkable chocolate-flavoured yogurt was produced in the same manner as described in Example 15, except that the cocoa shells were not alkalized.

The yogurt was found to have a good chocolate flavour; however, the yogurt had a cereal aftertaste. The yogurt was light-brown (milk chocolate-like) in colour.

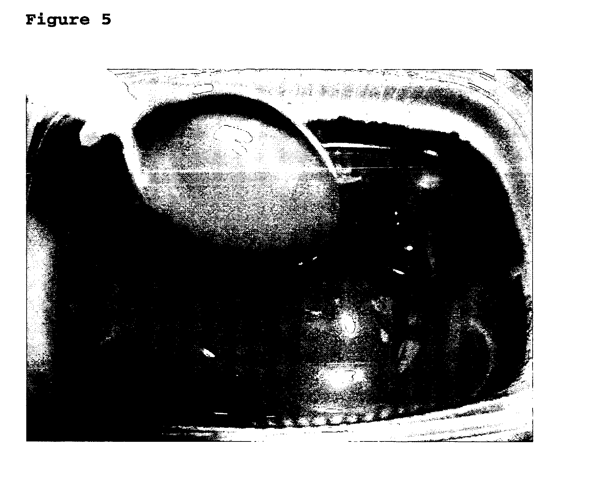

The viscosity of the yogurt was visibly increased by the addition of the non-alkalized cocoa shells so that the yogurt had a smooth texture and, although readily spoonable, was not suitable as a drink. This is illustrated by comparing Figure 3 (100% yogurt) and Figure 4 (91% yogurt, 9% alkalized cocoa shells) with Figure 5 (91% yogurt, 9% non-alkalized cocoa shells).

It can be concluded from Example 15 and Comparative Example 6 that alkalized cocoa shells are useful for increasing the pH of a yogurt and providing the yogurt with a unique and improved chocolate flavour compared to non-alkalized shells, even when no cocoa powder is present. Alkalized shells are also advantageous compared to non-alkalized cocoa shells for preserving the ability of a yogurt to serve as a drink since the viscosity of a yogurt is not significantly increased by the addition of alkalized shells.

## Claims

1. A food comprising at least 30 mass% alkalized cocoa shells based on the total mass of alkalized cocoa shells and cocoa powder in the food.

2. A food according to Claim 1, wherein the food comprises 30-50 mass% alkalized cocoa shells based on the total mass of alkalized cocoa shells and cocoa powder in the food.

3. A food according to Claim 1, wherein alkalized cocoa shells are the only source of a chocolate flavour in the food.

4. A food according to any preceding claim, wherein the food is a cocoa beverage formulation, an acidified dairy food or a yogurt.

5. A food according to any preceding claim, wherein the alkalized cocoa shells are ground alkalized cocoa shells having a D₉₀ value of less than 40 µm.

6. A food according to any preceding claim, wherein the alkalized cocoa shells are contained in the food in an amount of 1-20 mass% based on the total mass of the food.

7. A food according to any preceding claim, wherein the alkalized cocoa shells are roasted and fermented.

8. A method for manufacturing a food as defined in any preceding claim comprising the steps of:
(i) alkalizing cocoa shells which have been separated from cocoa nibs using an alkalizing agent; and
(ii) adding the alkalized cocoa shells to a food so that the food comprises at least 30 mass% alkalized cocoa shells based on the total mass of alkalized cocoa shells and cocoa powder in the food.

9. A method according to Claim 8, wherein the alkalizing agent comprises sodium hydroxide and/or ammonium carbonate.

10. A method according to Claim 8 or Claim 9, wherein the amount of the alkalizing agent is 4-25 mass% based on the mass of the cocoa shells as dry and de-fatted cocoa shells.

11. A method according to any of Claims 8-10, wherein the cocoa shells and the alkalizing agent are mixed in 30-70 mass% water based on the total mass of the cocoa shells.

12. A method according to any of Claims 8-11, further comprising one or both of the steps of grinding the cocoa shells before alkalizing the shells and grinding the alkalized shells before adding the shells to the food.

13. A method according to any of Claims 8-12, further comprising drying the alkalized cocoa shells before adding the shells to the food.

14. The use of alkalized cocoa shells for providing a food with a chocolate flavour.

## Amended claims

### Amended claims in accordance with Rule 137(2) EPC.

1. A food comprising at least 30 mass% alkalized cocoa shells based on the total mass of alkalized cocoa shells and cocoa powder in the food.

2. A food according to Claim 1, wherein the food comprises 30-50 mass% alkalized cocoa shells based on the total mass of alkalized cocoa shells and cocoa powder in the food.

3. A food according to Claim 1, wherein alkalized cocoa shells are the only source of a chocolate flavour in the food.

4. A food according to any preceding claim, wherein the food is a cocoa beverage formulation, an acidified dairy food or a yogurt.

5. A food according to any preceding claim, wherein the alkalized cocoa shells are ground alkalized cocoa shells having a D₉₀ value of less than 40 µm.

6. A food according to any preceding claim, wherein the alkalized cocoa shells are contained in the food in an amount of 1-20 mass% based on the total mass of the food.

7. A food according to any preceding claim, wherein the alkalized cocoa shells are roasted and fermented.

8. A method for manufacturing a food as defined in any preceding claim comprising the steps of:
(i) alkalizing cocoa shells which have been separated from cocoa nibs using an alkalizing agent; and
(ii) adding the alkalized cocoa shells to a food so that the food comprises at least 30 mass% alkalized cocoa shells based on the total mass of alkalized cocoa shells and cocoa powder in the food.

9. A method according to Claim 8, wherein the alkalizing agent comprises sodium hydroxide and/or ammonium carbonate.

10. A method according to Claim 8 or Claim 9, wherein the amount of the alkalizing agent is 4-25 mass% based on the mass of the cocoa shells as dry and de-fatted cocoa shells.

11. A method according to any of Claims 8-10, wherein the cocoa shells and the alkalizing agent are mixed in 30-70 mass% water based on the total mass of the cocoa shells.

12. A method according to any of Claims 8-11, further comprising one or both of the steps of grinding the cocoa shells before alkalizing the shells and grinding the alkalized shells before adding the shells to the food.

13. A method according to any of Claims 8-12, further comprising drying the alkalized cocoa shells before adding the shells to the food.
